# EUROPÄISCHE PATENTANMELDUNG

(11) **EP 0 957 001 A1**
(43) Veröffentlichungstag der Anmeldung: **17.11.1999**
(21) Anmeldenummer: 99108777.6
(22) Anmeldetag: 03.05.1999
(51) Int. Cl.: B60R 7/04

(54) **Transportbehälter für eine mit Sicherheitsgurten versehene Rücksitzbank eines Fahrzeugs**

(30) Priorität: 07.05.1998 DE 19820448
(71) Anmelder: Zander, Peter, 81541 München (DE)
(72) Erfinder: Zander, Peter, 81541 München (DE)
(74) Vertreter: Geyer, Werner, Dr.-Ing.

(57) **Zusammenfassung**

Bei einem Transportbehälter (1) für eine mit Sicherheitsgurten (19,20) versehene Rücksitzbank eines Fahrzeugs mit einem Behälterboden (2), einer Rückwand (3) zur Anlage an die Rückenlehne (23) der Rücksitzbank, zwei Seitenwänden (4,5) und einer der Rückwand (3) gegenüberliegenden Vorderwand ist an jeder der beiden seitlichen Begrenzungsflächen (8,9) der Vorderwand (6) oder an jeder der beiden Seitenwände (4,5) ein über die von der jeweils zugeordneten Seitenwand (4;5) aufgespannte Ebene überstehender, im wesentlichen von oben nach unten gerichteter, seitlicher Haltebügel (10) befestigt. Dieser kann in eine Schließstellung, in der er mit der Fläche (8;9), an der er befestigt ist, eine geschlossene Öffnung zum Durchlaufen eines Sicherheitsgurtes (19;20) bildet und in der er lösbar verriegelt werden kann, und in eine geöffnete Stellung zum Einführen bzw. Herausnehmen des Sicherheitsgurtes (19;20) verbracht werden.

## Beschreibung

Die Erfindung bezieht sich auf einen Transportbehälter für eine mit Sicherheitsgurten versehene Rücksitzbank eines Fahrzeugs, mit einem Behälterboden, einer Rückwand zur Anlage an die Rückenlehne der Rücksitzbank, zwei Seitenwänden und einer der Rückwand gegenüberliegenden Vorderwand.

Es ist eine Vielzahl von Ausgestaltungen von Transportbehältern, insbesondere für den Transport von Tieren, auf Fahrzeugrücksitzen bekannt, wobei die Sicherung der Lage des Transportbehälters während der Fahrt entweder dadurch erfolgt, daß er (gegebenenfalls auch durch eine spezielle Formgebung begünstigt) zwischen der Rücklehne des vor ihm vorhandenen Fahrzeugsitzes und der Lehne des Rücksitzes kraft- und/oder formschlüssig in seiner Lage verklemmt bzw. festgelegt wird. Auch Konstruktionen, bei denen zusätzliche Abstützeinrichtungen eingesetzt werden, sind vereinzelt vorgeschlagen worden.

Die bekannten Transportbehälter erweisen sich, insbesondere wenn sie zwischen den Sitzen eingeklemmt oder den dazwischen befindlichen Platz formschlüssig ausfüllen sollen, als zeitraubend und umständlich in ihrer Anbringung, und solche Anordnungen sind auch für die Sitze nicht besonders schonend.

Ausgehend hiervon liegt der Erfindung die Aufgabe zugrunde, einen Transportbehälter der eingangs genannten Art zu entwickeln, der bei vorzüglicher Lagesicherung besonders rasch angebracht werden kann, einfach im Aufbau ist und auch keine Beschädigung der Fahrzeugsitze bei seiner Montage bzw. seiner Verwendung mit sich bringt.

Erfindungsgemäße wird diese Aufgabe bei einem Transportbehälter der eingangs genannten Art dadurch gelöst, daß an jeder der beiden seitlichen Begrenzungsflächen der Vorderwand, also an deren seitlichen Randflächen, oder an jeder der beiden Seitenwände ein im wesentlichen von oben nach unten gerichteter, seitlicher Haltebügel befestigt ist, der über die von der jeweils zugeordneten Seitenwand aufgespannte Ebene übersteht und in eine Schließstellung, in der er mit der Fläche, an der er befestigt ist (also mit der zugeordneten seitlichen Begrenzungsfläche der Vorderwand bzw. mit der Außenfläche der zugeordneten Seitenwand), eine geschlossene Öffnung zum Durchlaufen eines Sicherheitsgurtes bildet und in der er lösbar verriegelt werden kann, sowie in eine geöffnete Stellung zum Einführen bzw. Herausnehmen des Sicherheitsgurtes verbringbar ist.

Der erfindungsgemäße Transportbehälter, der sich ganz bevorzugt für den Transport von Tieren eignet und vorzugsweise als Hundetransportbox einsetzbar ist, weist zunächst einen verblüffend einfachen Aufbau auf: Er benötigt nur zwei in geeigneter Weise an ihm angebrachte seitliche Haltebügel, die zum Durchführen eines Sicherheitsgurtes geeignet sind und jeweils auf die betreffende Seite etwas vorstehen, damit der durch sie hindurchzuführende Sicherheitsgurt, der auf der betreffenden Seite neben der entsprechenden Seitenwand herangeführt werden muß, auch gut durch den jeweiligen Haltebügel hindurchlaufen und dabei von diesem wieder umgelenkt werden kann. Zum Einführen ist hierbei nur die Schlaufe des Sicherheitsgurtes zu verwenden, an der der Haken zum Einführen in das Gurtschloß angebracht ist, die bei montiertem erfindungsgemäßem Transportbehälter also von ihrem oberen Anlenkpunkt her etwas nach unten zu dem betreffendem Haltebügel hinläuft, durch diesen hindurchläuft, an ihm umgelenkt wird und von ihm aus zu dem unteren Anlenkpunkt des Sicherheitsgurtes zurückläuft.

Der erfindungsgemäße Transportbehälter läßt sich außerordentlich rasch und einfach montieren. Hierzu wird er seitlich auf die Rückbank des Fahrzeuges geschoben, mit seiner Rückwand gegen die Rücklehne des Sitzes angelegt, anschließend jeder der Haltebügel auf beiden Seiten in seine geöffnete Stellung gebracht, der auf dieser Seite vorliegende Sicherheitsgurt aus seiner Ruhestellung herausgezogen, in den Haltebügel eingehängt und anschließend der Haltebügel in seine geschlossene, verrastete Schließstellung überführt. Dies kann sehr rasch erfolgen, wonach dann bereits die Montage des erfindungsgemäßen Transportbehälters beendet ist.

Das hierbei eingesetzte Befestigungssystem, das jeweils von zwei Sicherheitsgurten und zwei Haltebügeln gebildet wird, spannt den Transportbehälter in seine Anlageposition gegen die Lehne des Rücksitzes hin vor und verhindert damit ein unerwünschtes Verrutschen während der Fahrt. Sollte es zu einem starken Bremsvorgang oder gar einem Crash kommen, blockieren die Sicherheitsgurte in der üblichen Form und verhindern damit, daß der Transportbehälter nach vorne gegen den Vordersitz fallen oder gar noch im Innenraum herumgewirbelt werden könnte. Damit wird gleichzeitig auch noch weitgehend verhindert, daß der Inhalt des erfindungsgemäßen Transportbehälters, z.B. ein größerer Hund, eine Katze o.ä., in einer solchen Situation aus dem Behälter heraus nach vorne geworfen werden könnte, da er bei einem Fall nach vorne von der Vorderwand des Behälters sicher aufgehalten wird.

Der erfindungsgemäße Transportbehälter kann somit sehr einfach und rasch an seinen beiden Seiten durch die dort ohnehin vorgesehenen Sicherheitsgurte des Rücksitzes befestigt werden und wird in seinem befestigten Zustand sicher und fest gehalten, so daß er bei einer Vollbremsung oder einem Auffahrunfall bestens gesichert ist. Die vor der Rückbank sitzenden Fahrzeuginsassen werden durch den Transportbehälter oder seinen Inhalt nicht mehr gefährdet, auch während des Fahrens nicht abgelenkt (was geschehen könnte, wenn eine nicht gesicherte Transportbox beim Fahren plötzlich auf der Rückbank z.B. in einer Seitenkurve seitlich wegrutscht) und sind damit auch insoweit bei Unfällen vor einer Verletzung durch den Transportbehälter gut geschützt.

Der erfindungsgemäße Transportbehälter kann unterschiedlich groß und auch in seiner Form unterschiedlich geformt sowie aus verschiedenen Materialien gefertigt sein. So besteht z.B. die Möglichkeit, seine Wände aus geeignetem Holz oder aus Leichtmetall oder sogar aus Kunststoff herzustellen. Dabei müssen die Wände nicht unbedingt aus Vollmaterial bestehen, sie können auch aus einem geeigneten Gitterwerk oder Netzwerk bestehen, wenn dieses die ausreichende Stabilität und Steifigkeit aufweist, die gewünscht wird. Die Wände sind bevorzugt auf ihrer Innenseite etwas ausgepolstert, so daß ein in dem Transportbehälter z.B. transportiertes Tier auch nicht sonstwie der Gefahr einer Verletzung durch Aufprall auf eine harte Fläche oder eine scharte Kante des Behälterrahmens ausgesetzt ist.

Die Anordnung der beiden seitlichen Haltebügel wird bevorzugt so gewählt, daß sie im Hinblick auf eine Mittelebene, die von oben nach unten verläuft und durch die Mitten von Vorderwand und Rückwand geht, symmetrisch angebracht sind, so daß die Rückhaltekräfte auch an symmetrisch einander entsprechenden Stellen in die Tragstruktur des Transportbehälters eingeleitet werden.

Bevorzugt sollte jeder seitliche Haltebügel möglichst weit von der Rückwand nach vorne und vom Boden nach oben versetzt sein, weil sich hierdurch im eingesetzten und "angeschnallten" Zustand des Behälters die günstigsten Rückhaltekräfte durch die eingehängten Sicherheitsgurte ergeben. Denn je weiter der Sicherheitsgurt bei seinem Einführen in den zugeordneten Haltebügel aus seiner Ruhestellung herausgezogen werden muß, desto günstiger ist die über den Haltebügel in dessen Schließzustand auf den Transportbehälter durch den Sicherheitsgurt bereits ausgeübte Rückhaltekraft. Dadurch, daß der Haltebügel möglichst weit vom Behälterboden nach oben versetzt sein soll, kann erreicht werden, daß die Lage des Haltebügels sich der Ideallage in halber Höhe zwischen dem oberen und unteren Aufhängepunkt des Sicherheitsgurtes annähert und damit die Lage der auf den Transportbehälter einwirkenden Resultierenden aus den über die beiden Gurtabschnitte auf den Haltebügel einwirkenden Kräfte möglichst parallel zum Boden des Transportbehälters in Richtung auf die Lehne der Rücksitzbank (oder zumindest unter einem möglichst kleinen Winkel zu dieser) verläuft.

Die Länge des erfindungsgemäßen Transportbehälters (in Richtung des Verlaufes der Rückbank gesehen), wird bevorzugt so gewählt, daß sie etwas kleiner als der Abstand zwischen zwei oder drei an der Rücksitzbank des Fahrzeuges angebrachten Sicherheitsgurten ist, so daß bei der Montage die beiden zu jeder Seite des Transportbehälters einzusetzenden Sicherheitsgurte unter einer möglichst geringen Neigung zu der Ebene der dort vorliegenden Seitenwand verlaufen.

Besonders bevorzugt werden bei einem erfindungsgemäßen Transportbehälter die seitlichen Haltebügel im oberen Bereich der Seitenwände bzw. der seitlichen Begrenzungsflächen der Vorderwand angebracht, und zwar so weit oben, daß bevorzugt das obere Ende jedes seitlichen Haltebügels direkt neben dem oberen Rand des Transportbehälters liegt. Hierdurch wird eine möglichst hohe Lage des betreffenden Haltebügels erreicht.

Die Haltebügel können über ihre Länge hinweg in jeder geeigneten Form ausgebildet sein, wobei sie bevorzugt kreisabschnittförmig oder im wesentlichen U-förmig verlaufen. Es ist aber für bestimmte Einsatzfälle auch denkbar, daß sie eine eckige, eine ovale oder auch eine ganz spezielle Formausbildung erfahren, wenn dies im speziellen Einsatzfall zu besonderen Vorteilen führt.

Bevorzugt werden die Haltebügel so ausgebildet, daß sie sich zur Ausbildung eines Einführungsspaltes für den einzuführenden Sicherheitsgurt, also zur Ausbildung ihrer geöffneten Stellung, z.B. an einem ihrer beiden Endschenkel aus dem sie halternden Teil herausziehen und/oder zu diesem verdrehen lassen. Eine besonders bevorzugte Ausgestaltung der Erfindung besteht darin, daß der einzelne Haltebügel an einem seiner Enden eine Verlängerung aufweist, die in eine Aufnahmebohrung in dem Teil, an dem er befestigt ist, hineinragt und in dieser Aufnahmebohrung senkrecht zur Oberfläche dieses Teils zwischen einer ganz eingeschobenen und einer nur teilweise eingeschobenen Stellung verschiebbar ist, wobei in der ganz eingeschobenen Stellung der Haltebügel sich in seiner Schließstellung befindet, während in der nur teilweise eingeschobenen Stellung er seine geöffnete Position aufweist. Vorteilhafterweise ist dabei der Haltebügel in der nur teilweise eingeschobenen Position auch noch um die Mittelachse der Aufnahmebohrung verdrehbar, wodurch sich, insbesondere wenn der betreffende Haltebügel an einer seitlichen Begrenzungsfläche der Vorderwand angebracht ist, eine besonders große Öffnung für das Einführen des Sicherheitsgurtes in seiner geöffneten Stellung erreichen läßt.

Die Ausgestaltung der Haltebügel selbst ist in jeder geeigneten und zweckmäßigen Form möglich, wobei jeder Haltebügel senkrecht zu seiner Längserstreckung im Querschnitt bevorzugt kreisförmig oder oval oder aus sonst einem geeigneten Strangprofil bestehen kann. Selbstverständlich kann jeder Haltebügel aber auch in jeder anderen geeigneten Weise sonstwie ausgebildet sein, wenn dadurch die von ihm auszuübende Halte- und Umlenkfunktion günstig erfüllt wird.

Die Haltebügel können auch aus jedem geeigneten Material bestehen, wobei vorzugsweise Haltebügel aus Metall oder aus bevorzugt faserverstärktem Kunststoff eingesetzt werden. Es können aber auch alle anderen geeigneten Materialien hierfür vorgesehen werden.

Um die Verriegelung jedes Haltebügels in seiner Schließstellung zu erreichen, wird vorteilhafterweise jedem Haltebügel eine bevorzugt lösbare Verriegelungseinrichtung zugeordnet, die mittels eines herausziehbaren, eindrückbaren, verdreh- oder verschieb- oder verschwenkbaren Knopfes oder Riegels arretierbar ist. Ein solcher Knopf bzw. Riegel kann an jeder geeigneten Stelle angebracht werden, wird aber bevorzugt oben oder unten oder an der Seite der Vorderwand angebracht. Es ist auch denkbar, daß die Verriegelungseinrichtungen beider Haltebügel mittels eines einzigen solchen Knopfes oder Riegels gleichzeitig verriegelt werden können.

Eine weitere vorteilhafte Ausgestaltung des erfindungsgemäßen Transportbehälters besteht auch darin, daß jedem Haltebügel eine bei seiner Überführung in seine geöffnete (oder geschlossene) Stellung spannbare Federeinrichtung zugeordnet ist, mit der er in dieser Stellung in Richtung auf seine andere Stellung hin vorgespannt wird, so daß er z.B. immer auf seine Schließstellung hin vorgespannt ist und aus seiner Offenstellung automatisch in die Schießstellung zurückschnappt, wenn die Bedienungsperson die auf ihn wirkende Öffnungskrafkt entfernt, bzw. bei einer Vorspannung in die Öffnungsstellung muß dann zum Einlegen bzw. Herausnehmen des Sicherheitsgurtes nur die lösbare Verriegelungseinrichtung entriegelt werden, wonach in diesem Fall der Haltebügel sogleich selbsttätig in die geöffnete Position springt.

Es kann auch vorteilhaft sein, wenn ein Haltebügel mittels einer Verschwenkbewegung um eines seiner beiden Enden um eine Achse, die senkrecht zu seiner Längsmittelebene verläuft, auf- und zugeklappt werden kann, so daß in diesem Fall eine verschiebliche Aufnahme in einer Aufnahmeöffnung innerhalb des Teiles, das ihn trägt, nicht erforderlich ist.

Die Erfindung wird nachfolgend anhand der Zeichnung im Prinzip beispielshalber noch näher erläutert. Es zeigen:
- Fig. 1: einen erfindungsgemäßen Transportbehälter in Form einer Hundetransportbox in Perspektivdarstellung, wobei einer der beiden gezeigten Haltebügel in seine geöffnete Stellung verschwenkt ist;
- Fig. 2: eine Prinzipdarstellung des Transportbehälters aus Fig. 1 in seinem befestigten Zustand, d.h. in seinem durch Sicherheitsgurte gesicherten Zustand;
- Fig. 3: eine vergrößerte Prinzipdarstellung eines Haltebügels bei einem erfindungsgemäßen Transportbehälter im Schließzustand (Haltezustand), und
- Fig. 4: den Haltebügel aus Fig. 3 in seinem geöffneten Zustand, bereit zum Einführen eines Sicherheits- bzw. Haltegurtes.

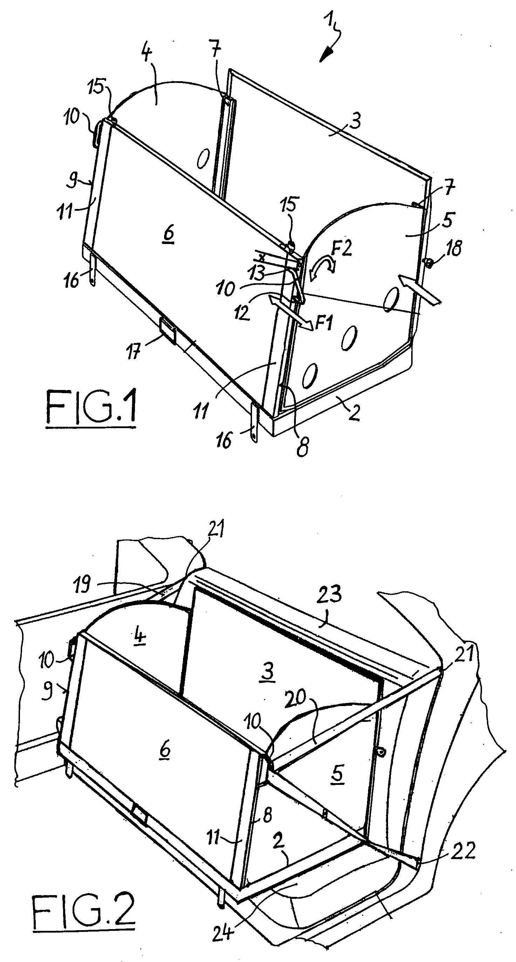

Fig. 1 zeigt einen Transportbehälter 1 in Form einer Hundebox, wie sie zum Transport von Hunden in Personenkraftwagen dient.

Der Transportbehälter 1 besteht aus einem im wesentlichen rechteckig geformten Behälterboden 2, einer Rückwand 3, die zur Anlage an die Rückenlehne einer Rücksitzbank eines Fahrzeugs dient (vgl. Fig. 2), zwei Seitenwänden 4 und 5 sowie aus einer Vorderwand 6. Die Rückwand 3, die Seitenwände 4 und 5 sowie die Vorderwand 6 verlaufen im wesentlichen senkrecht zum Behälterboden 2, so daß die von dem Transportbehälter 1 umschlossene Öffnung in der Draufsicht einen ungefähr rechtwinkeligen Querschnitt aufweist. Der Aufbau des Transportbehälters 1 ist so gewählt, daß die Rückwand 3 und die Vorderwand 6 unten verschwenkbar am Behälterboden 2 angelenkt sind, während die Seitenwände 4 und 5 an ihrer vorderen Endkante verschwenkbar an der Vorderwand 6 angelenkt sind. Auf der der Vorderwand 6 zugewandten Innenseite der Rückwand 3 sind in der Nähe der beiden seitlichen Endkanten in einem geeigneten Abstand zu diesen senkrecht von unten nach oben verlaufende Anschlagleisten 7 angebracht, gegen die die ausgeklappten Seitenwände 4 und 5 mit ihren ausgeklappten Endseiten von außen her zur Anlage gebracht und dort in geeigneter Weise festgelegt oder befestigt werden. Mittels geeignet angebrachter Arretierstifte 18 können sie in ihrer Endstellung blockiert werden.

Durch die beschriebene Konstruktion läßt sich zum Transport der Transportbehälter 1 einfach zusammenklappen, indem zunächst die beiden Seitenwände 4, 5 gegen die Rückseite der Vorderwand 6 verklappt und dann mit dieser auf den Behälterboden 2 umgeklappt werden. Anschließend wird die Rückwand 2 auf die eingeklappte Vorderwand 6 umgelegt und dann das so entstandene Paket geeignet fixiert. Zum Aufbau werden diese Schritte in umgekehrter Reihenfolge ausgeführt.

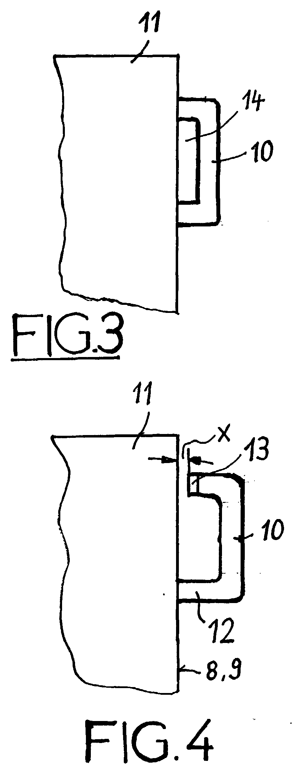

Wie aus Fig. 1 gut ersichtlich ist, ist an jeder der beiden seitlichen Endflächen 8 bzw. 9 der Vorderwand 6 jeweils im oberen Endbereich ein Haltebügel 10 angeordnet, der, wie die Fig. 3 und 4 in Vergrößerung und in prinzipieller Darstellung zeigen, in seiner Schließstellung (Fig. 3) über seine Länge hinweg U-förmig verläuft.

Um eine gute Befestigungsmöglichkeit sowie eine gute Krafteinleitung und Kraftübertragung über den jeweiligen Haltebügel 10 in die Vorderwand 6 und damit in die Gesamtstruktur des Transportbehälters 1 zu gewährleisten, ist die Vorderwand 6 an ihren beiden seitlichen Endbereichen jeweils mit einem leistenförmigen Verstärkungsteil 11 versehen.

Fig. 1 zeigt den in der Figur vorderen Haltebügel 10 in seiner geöffneten Stellung zum Einführen eines Sicherheitsgurtes oder Tragegurtes, während der andere, in der Darstellung hinten gezeigte Haltebügel 10 sich in seiner Schließstellung befindet.

Wie aus den Fig. 3 und insbesondere 4 entnehmbar ist, hat der Haltebügel 10 an seinem einen (in den Fig. 3 und 4: an seinem unten dargestellten) Ende eine Verlängerung 12, die in eine (in den Figuren nicht dargestellte) Aufnahmebohrung in das Verstärkungsteil 11 hineinragt, an dem der Haltebügel 10 befestigt ist. Die Verlängerung 12 ist in dieser Aufnahmebohrung axial verschieblich, und zwar in eine eingeschobene Position (die in Fig. 3 dargestellt ist), in welcher auch das der Verlängerung 12 gegenüberliegenden Ende 13 des Haltebügels 10 ein wenig in eine komplementäre kleine Aufnahmeöffnung in der Befestigungsfläche 8 bzw. 9 an dem Verstärkungsteil hineinragt und damit den Haltebügel 10 in dieser Schließstellung auch gegen ein seitliches Verschwenken formschlüssig sichert.

Fig. 4 zeigt den Haltebügel 10 in seiner herausgezogenen Stellung, also in der Stellung, in der die Verlängerung 12 nur teilweise in die zugehörige Aufnahmebohrung eingeschoben ist.

Dadurch entsteht zwischen dem gegenüberliegenden Ende 13 des Haltebügels 10 und der zugeordneten Oberfläche 8 bzw. 9 des Verstärkungsteils 11 ein Spalt x, der so groß ist, daß durch ihn ein Sicherheitsgurt unschwer auf die Innenseite des Haltebügels 10 eingeführt oder von dieser nach außen herausgenommen werden kann.

Wie Fig. 3 zeigt, bildet in seiner geschlossenen Stellung der Haltebügel 10 zusammen mit der Seitenfläche 8 bzw. 9 des Verstärkungselementes 11 der Vorderwand 6 eine in sich geschlossene Öffnung 14 aus, durch die ein Sicherheits- oder Spanngurt ohne weiteres hindurchlaufen kann.

Den beiden Haltebügeln 10 ist jeweils eine (in den Figuren nicht dargestellte) Verriegelungseinrichtung zugeordnet, die jeweils über einen auf der oberen Abschlußkante der Vorderwand 6 angebrachten, herausziehbaren Stift 15 gelöst werden kann. Soll also ein Haltebügel 10 aus seiner Schließstellung in die geöffnete Stellung überführt werden, wird der entsprechende Stift 15, der die Verriegelungseinrichtung löst, von der Bedienungsperson angehoben, wonach dann der Haltebügel mit der Konstruktion, wie sie in Fig. 1 gezeigt ist, zunächst in Längsrichtung seiner Verlängerung 12 (in Richtung des Pfeiles F1 in Fig. 1) herausgezogen wird, so daß ein Spalt X entsteht, wie er in Fig. 4 gezeigt ist. Anschließend wird er um die Verlängerung 12 in Richtung des Pfeiles F2 (Fig. zur Vorderseite der Vorderwand 6 hin verschwenkt, wodurch dann zwischen dem oberen Ende 13 des Haltebügels 10 und der Vorderwand 6 insgesamt eine Öffnung X' entsteht, über die der Sicherheitsgurt besonders einfach auf die Innenseite des Haltebügels 10 geführt werden kann. Der Stift 15 kann nach dem Lösen der Verriegelung gleich wieder von der Bedienungsperson losgelassen werden, weil die Verriegelung jeweils so ausgebildet ist, daß sie, wenn der Haltebügel 10 in Richtung des Pfeiles F1 herausgezogen wird, bis auf weiteres dauerhaft blockiert ist.

Ist der Haltegurt oder Sicherheitsgurt (20;21) in die Innenseite des Haltebügels 10 eingeführt, wird der Haltebügel 10 wieder in seine in Fig. 4 gezeigte Stellung in Richtung des Pfeiles F2 (diesmal in Gegenrichtung) zurückgeschwenkt, dann auf die zugewandte Seitenfläche 8 bzw. 9 des ihn tragenden Verstärkungselementes 10 in Richtung des Pfeiles F1 (auch hier in Gegenrichtung) solange eingedrückt, bis die in Fig. 3 gezeigte Schließstellung erreicht ist. In dieser findet dann eine automatische Verriegelung durch die Verriegelungseinrichtung statt.

Auf der Vorderseite des Behälterbodens 2 sind, wie Fig. 1 zeigt, nach unten ragende Halterungen 16 und ein ausklappbarer Handgriff 17 vorgesehen, die nur dazu dienen, die dargestellte Hundebox 1 im zusammengefalteten Zustand zu fixieren.

An der seitlichen Begrenzungsfläche der Rückwand 3 ist ferner ein Verriegelungsknopf 18 gezeigt, der über eine (in den Figuren nicht dargestellte) Verriegelungseinrichtung eine Lagearretierung der Seitenwände 4 und 5 in deren ausgeklappter Stellung an den zugehörigen Anschlagleisten 7 sicherstellt.

Fig. 2 zeigt in einer perspektivischen Prinzipdarstellung den Transportbehälter aus Fig. 1 in einer auf dem Rücksitz eines Fahrzeuges montierten Lage.

Wie dabei erkennbar ist, ist außen an beiden Seitenwänden 4 bzw. 5 der dort jeweils vorhandene Sicherheitsgurt 19 bzw. 20 von seinem oberen bzw. unteren Anlenkpunkt 21 bzw. 22 aus zum auf dieser Seite vorliegenden Haltebügel 10 geführt, läuft durch diesen hindurch, wird dort umgelenkt und läuft zu dem jeweils anderen Anlenkpunkt 22 bzw. 21 zurück. Dabei liegt die Rückwand 3, wie Fig. 2 sehr schön zeigt, gegen die Rückenlehne 23 des Fahrzeugsitzes an, während der Behälterboden 2 auf der Sitzfläche 24 dieses Fahrzeugsitzes auf der Fahrzeugrückbank aufliegt.

## Patentansprüche

1. Transportbehälter (1) für eine mit Sicherheitsgurten (20,21) versehenen Rücksitzbank eines Fahrzeugs, mit einem Behälterboden (2), einer Rückwand (3) zur Anlage an die Rückenlehne (23) der Rücksitzbank, zwei Seitenwänden (4,5) und einer der Rückwand (3) gegenüberliegenden Vorderwand (6), **dadurch gekennzeichnet**, daß an jeder der beiden seitlichen Begrenzungsflächen der Vorderwand (6) oder an jeder der beiden Seitenwände (4,5) ein über die von der jeweils zugeordneten Seitenwand (4;5) aufgespannten Ebene überstehender, im wesentlichen von oben nach unten gerichteter seitlicher Haltebügel (10) befestigt ist, der in eine Schließstellung, in welche er mit der Fläche (8;9), an der er befestigt ist, eine geschlossene Öffnung (14) zum Durchlaufen eines Sicherheitsgurtes (20;21) ausbildet und in der er lösbar verriegelt werden kann, und in eine geöffnete Stellung zum Einführen bzw. Herausnehmen des Sicherheitsgurtes (20;21) verbringbar ist.

2. Transportbehälter nach Anspruch 1, dadurch gekennzeichnet, daß die beiden seitlichen Haltebügel (10) zu einer von unten nach oben durch die Mitten von Vorder- (6) und Rückwand (3) verlaufenden Behälter-Mittelebene symmetrisch angebracht sind.

3. Transportbehälter nach Anspruch 1 oder 2, dadurch gekennzeichnet, daß die seitlichen Haltebügel (10) im oberen Bereich der Seitenwände (4,5) bzw. der seitlichen Begrenzungsflächen (8,9) der Vorderwand (6) angebracht sind.

4. Transportbehälter nach Anspruch 3, dadurch gekennzeichnet, daß das obere Ende (13) jedes seitlichen Haltebügels (10) direkt neben dem oberen Rand des Transportbehälters (1) liegt.

5. Transportbehälter nach einem der Ansprüche 1 bis 4, dadurch gekennzeichnet, daß der einzelne Haltebügel (10) über seine Länge kreisabschnittförmig oder U-förmig verläuft.

6. Transportbehälter nach einem der Ansprüche 1 bis 5, dadurch gekennzeichnet, daß der einzelne Haltebügel (10) zum Überführen von seiner Schließstellung in seine geöffnete Stellung an einem seiner Enden um eine Achse senkrecht zu der Fläche (8;9), an der er befestigt ist, oder zu der Ebene der geschlossenen Öffnung (14), die er in seiner Schließstellung ausbildet, verschwenkbar ist.

7. Transportbehälter nach einem der Ansprüche 1 bis 5, dadurch gekennzeichnet, daß der einzelne Haltebügel (10) an einem seiner Enden eine Verlängerung (12) aufweist, die in eine Aufnahmebohrung in dem Teil (11), an dem er befestigt ist, hineinragt und in dieser senkrecht zur Oberfläche (8;9) dieses Teils (11) zwischen einer ganz eingeschobenen und einer nur teilweise eingeschobenen Position verschiebbar ist, wobei sich in der ganz eingeschobenen Position der Haltebügel (10) in seiner Schließstellung befindet, während er in seiner nur teilweise eingeschobenen Position seine geöffnete Stellung einnimmt.

8. Transportbehälter nach Anspruch 7, dadurch gekennzeichnet, daß in der nur teilweise eingeschobenen Position der Haltebügel (10) auch um die Mittelachse der Aufnahmebohrung verdrehbar ist.

9. Transportbehälter nach einem der Ansprüche 1 bis 8, dadurch gekennzeichnet, daß jeder Haltebügel (10) senkrecht zu seiner Längserstreckung im Querschnitt kreisförmig oder oval ausgebildet ist.

10. Transportbehälter nach einem der Ansprüche 1 bis 9, dadurch gekennzeichnet, daß die Haltebugel (10) aus Metall bestehen.

11. Transportbehälter nach einem der Ansprüche 1 bis 10, dadurch gekennzeichnet, daß jedem Haltebügel (10) eine mittels eines Verstellknopfes (15) lösbare Verriegelungseinrichtung zur Verriegelung in seiner Schließstellung zugeordnet ist.

12. Transportbehälter nach einem der Ansprüche 1 bis 11, dadurch gekennzeichnet, daß jedem Haltebügel (10) eine bei seiner Überführung in seine geöffnete Stellung spannbare Federeinrichtung zugeordnet ist, mit der er in seiner geöffneten Stellung in Richtung auf seine Schließstellung hin vorgespannt wird.

13. Verwendung eines Transportbehälters (1) nach einem der Ansprüche 1 bis 12 als Tiertransportbehälter, insbesondere als Hundebox.
